# FASCICULE DE BREVET EUROPEEN

(11) **EP 3 649 750 B1**
(45) Date de publication et mention de la délivrance du brevet: **10.04.2024**
(21) Numéro de dépôt: 18749458.8
(22) Date de dépôt: 03.07.2018
(51) Int. Cl.: H04B 10/11, H04B 10/80

(54) **SYSTÈME DE COMMUNICATION OPTIQUE SANS FIL ENTRE UN ÉLÉMENT TOURNANT ET UN ÉLÉMENT FIXE**
DRAHTLOSES OPTISCHES KOMMUNIKATIONSSYSTEM ZWISCHEN EINEM ROTIERENDEN ELEMENT UND EINEM FESTEN ELEMENT
WIRELESS OPTICAL COMMUNICATION SYSTEM BETWEEN A ROTATING ELEMENT AND A FIXED ELEMENT

(30) Priorité: 03.07.2017 FR 1756256
(43) Date de publication de la demande: 13.05.2020
(73) Titulaire: Mersen France Amiens SAS, 80080 Amiens (FR); Université de Picardie Jules Verne, 80025 Amiens Cedex 1 (FR)
(72) Inventeur: BOUANBA, Yacine, 02100 Harly (FR); RAMLALL, Radjy, 59290 Washquehal (FR); DUBOIS, Jérôme, 02100 Saint-Quentin (FR); LORTHOIS, Aurélien, 02420 Nauroy (FR); BOURNY, Valéry, 80000 Amiens (FR)
(74) Mandataire: Fédit-Loriot
(86) Numéro de dépôt international: PCT/FR2018/051646
(87) Numéro de publication internationale: WO 2019/008263

(56) Documents cités:
- WO-A1-2015/004736
- WO-A1-2015/107686

## Description

L'invention concerne le transfert de données entre un élément tournant et un élément fixe. Un système de transfert de données, communément appelé « joint tournant électrique » ou « slip ring » en anglais, assure la transmission de signaux électriques entre un élément tournant et un élément fixe de ce système.

Classiquement, un contact glissant permet d'assurer la transmission de signaux électriques entre l'élément tournant et l'élément fixe, sans conversion des signaux électriques. Un dispositif de transmission peut par exemple comprendre une ou plusieurs bagues collectrices et un ou plusieurs éléments de contact respectifs, souvent désignés par le terme « frotteur » : par exemple des balais, des fils, des fibres ou autre, disposés de façon à venir frotter contre la ou les bagues collectrices.

Un joint tournant électrique peut par exemple permettre le transfert de données de mesure issues de capteurs solidaires de l'élément tournant, vers un processeur solidaire de la partie fixe, et/ou d'instructions issues d'un processeur solidaire de la partie fixe et destinées à un actionneur solidaire de la partie tournante.

L'invention peut trouver une application par exemple dans les communications entre un élément solidaire d'un arbre d'éolienne et un élément solidaire d'une nacelle. L'invention n'est en rien limitée à cette application : par exemple, l'invention peut trouver une application dans l'aéronautique, dans l'aérospatiale, la robotique, la production d'électricité, et dans l'industrie de manière plus générale.

Dans le cas d'une éolienne, le transfert de données peut notamment avoir lieu entre des capteurs installés sur une partie mobile de la nacelle, par exemple le nez de la nacelle de l'éolienne, et un superviseur comprenant au moins un processeur dans la nacelle ou au sol. Par exemple, des données de mesures issues de capteurs, par exemple des valeurs d'orientation de pales, des valeurs représentatives de leurs vibrations, des valeurs indiquant un état de charge de batterie, ou autre, peuvent être transmises via un baguier, vers le processeur, et inversement des données de commande issues du processeur, par exemple des messages pour imposer un angle de rotation des pales, ou autre, peuvent également être transférées via le baguier.

Le document WO 2015/079176 décrit un système de transfert de données sans contact, c'est-à-dire intégrant des moyens de transmission radiofréquences. Ce système est relativement peu contraignant en termes de maintenance.

Il est envisagé d'avoir recours à un système de communication optique sans fil, ou OWC (pour « Optical Wireless Communications » en anglais) afin de réduire le temps de transfert des données entre les capteurs ou actionneurs sur la partie tournante et le dispositif de supervision sur la partie fixe. Néanmoins, les communications risquent d'être affectées par l'environnement, notamment les vibrations susceptibles de conduire à des pertes d'alignement entre émetteur et récepteur optiques, perturbant ainsi le chemin optique, flux lumineux du transfert des données.

Il existe donc un besoin pour un système de transfert de données impliquant une communication optique sans fil entre un élément fixe et un élément tournant qui soit plus robuste et plus fiable.

Le document WO 2005/107686 A1 divulgue un système de transfert de données par communication optique sans fil entre une partie tournante et une partie fixe

Il est proposé un système de transfert de données à moins une voie entre un élément tournant et un élément fixe par communication optique sans fil selon la revendication 1.

Le jeu tournant peut comprendre la pluralité d'émetteurs ou récepteurs optiques disposés en anneau, par exemple montés directement sur l'élément tournant, ou bien encore sur un support annulaire (en une ou plusieurs parties) recevant lui-même l'élément tournant et solidarisé à cet élément tournant.

Le support annulaire peut par exemple comprendre deux ou davantage supports en arc de cercle, permettant ainsi un montage plus aisé sur l'élément tournant.

Alternativement, les émetteurs ou récepteurs disposés en anneau peuvent être fixes relativement à l'élément tournant. On pourra par exemple prévoir de monter ces émetteurs ou récepteurs sur un support en forme d'anneau de diamètre supérieur aux dimensions d'une section de l'élément tournant dans un plan normal à l'axe de rotation, entourant l'élément tournant, mais fixe. Les émetteurs ou récepteurs sont montés sur ce support de façon à avoir leurs cônes d'émission/réception orientés vers l'élément tournant.

Le ou les récepteur(s) ou émetteur(s) tournant(s) peuvent être montés sur l'élément tournant en regard de cet élément en forme d'anneau.

On peut prévoir une seule voie, ou plusieurs voies, notamment plusieurs voies montantes et plusieurs voies descendantes.

On peut prévoir un petit nombre, par exemple un seul, deux ou cinq, de récepteur(s) ou émetteur(s) dans l'autre parmi le jeu fixe et le jeu tournant, auquel cas cet autre jeu peut avoir un caractère relativement ponctuel (au sens de limité spatialement), ou bien davantage. Cet autre jeu peut par exemple comprendre plusieurs récepteurs ou émetteurs, répartis en arc de cercle, par exemple de façon à occuper une plage angulaire entre 1° et 270°, par exemple entre 1° et 30°, avantageusement entre 1° et 15°, ou bien encore entre 30° et 270°, de par exemple 5°, 10°, 25°, 90° ou 125°, ou en anneau (en une ou plusieurs parties). Dans le dernier cas, le système peut comprendre un couple d'anneaux concentriques.

Les jeux fixes et tournants sont agencés de sorte que quelque soit la position angulaire de l'élément tournant, le cas échéant :
- ledit au moins un récepteur optique de l'autre parmi le jeu tournant et le jeu fixe reçoive des signaux optiques émis par au moins un émetteur de ladite pluralité d'émetteurs optiques répartis en anneau, ou
- au moins un récepteur de ladite pluralité de récepteurs optiques répartis en anneau reçoive des signaux optiques émis par au moins un émetteur optique de l'autre parmi le jeu tournant et le jeu fixe.

Le système peut avantageusement comprendre en outre des moyens de traitement en communication avec ledit au moins un émetteur du jeu tournant ou du jeu fixe le cas échéant.

Ces moyens de traitement peuvent avantageusement être agencés pour générer indépendamment de la position angulaire de l'élément tournant un signal électrique et pour transmettre vers ledit au moins un émetteur ledit signal électrique de sorte que s'il y a plus d'un émetteur dans ce jeu, ces émetteurs émettent simultanément le même signal optique.

Ainsi, cette disposition en anneau peut permettre de garantir les transmissions malgré d'éventuelles vibrations de l'élément tournant.

En outre, il n'est pas nécessaire de prendre en compte la position angulaire de l'élément tournant lors de la génération des flux à transmettre, ce qui peut être particulièrement intéressant dans les applications pour lesquelles cette position est délicate à prédire, comme les éoliennes. On pourra ainsi prévoir une communication avec un débit de données relativement élevé.

La disposition des émetteurs et des récepteurs peut être déterminée en se basant sur les lois géométriques de l'optique et en prenant en compte les caractéristiques des émetteurs, des récepteurs et leur encombrement.

Pour choisir le nombre d'émetteurs ou récepteurs optiques, on pourra prendre en compte la forme des cônes d'émission et de réception, la sensibilité des récepteurs, le nombre et la disposition d'émetteurs ou récepteurs de l'autre parmi le jeu fixe et le jeu tournant, et déterminer un nombre d'émetteurs ou de récepteurs pour la pluralité d'émetteurs ou récepteurs disposés en anneau suffisamment élevé pour qu'une disposition régulière en anneau de ces émetteurs ou récepteurs assure un transfert de signal optique quelque soit la position angulaire de l'élément tournant.

Dans le cas d'émetteurs en anneau, les émissions sont omnidirectionnelles et relativement simples à piloter. Les moyens de traitement peuvent être agencés pour transmettre vers tous les émetteurs de ladite pluralité d'émetteurs optiques répartis en anneau un même signal électrique pour que ces émetteurs transmettent de façon simultanée un même signal optique indépendamment de la position angulaire de l'élément tournant.

Dans le cas de récepteurs disposés en anneau, les émissions ne prennent pas en compte la position angulaire de l'élément tournant, et on peut prévoir un traitement, par exemple une sommation sur la totalité des récepteurs des signaux électriques issus des signaux optiques reçus par les récepteurs, de façon à retrouver un signal correspondant au(x) signal(aux) mesuré(s) par le ou les récepteur(s) en regard, à l'instant de l'émission optique, de l'émetteur de l'autre parmi le jeu fixe et le jeu tournant.

Le système peut comprendre des moyens de traitement supplémentaires, en communication, avantageusement raccordés électriquement, avec les récepteurs du jeu fixe ou du jeu mobile.

Lorsque les récepteurs sont répartis en anneau, ces moyens de traitement supplémentaires peuvent être agencés pour élaborer indépendamment de la position angulaire de l'élément tournant un signal électrique correspondant au(x) signal(aux) électrique(s) mesurés par le ou les récepteur(s) en regard, à l'instant de l'émission optique, de l'émetteur de l'autre parmi le jeu tournant et le jeu fixe à partir des signaux électriques mesurés par les récepteurs de ladite pluralité de récepteurs optiques répartis en anneau.

Ces moyens de traitement supplémentaires peuvent être agencés pour transmettre ce signal électrique vers un autre équipement solidaire de l'élément sur lequel sont montés les récepteurs en anneau. On pourra ainsi mettre en oeuvre un circuit sommateur analogique ou numérique.

Les moyens de traitement supplémentaires peuvent par exemple comprendre un noeud raccordant entre eux des éléments linéaires conducteurs (des fils ou des pistes par exemple) raccordés chacun par ailleurs à un récepteur. La sommation des signaux électrique est ainsi effectuée simplement, par un simple noeud entre éléments linéaires conducteurs disposés en parallèle.

Les signaux optiques sont convertis en signaux électriques par des moyens de conversion intégrés dans les récepteurs. Les récepteurs peuvent par exemple comprendre des photodiodes, ou autre.

L'invention n'est pas limitée à une simple somme. On pourrait par exemple prévoir un seuillage, seuls les signaux supérieurs à un seuil étant conservés pour la sommation afin d'éviter de prendre en compte les signaux issus de récepteurs éloignés de l'émetteur. De manière générale, l'invention n'est en rien limitée par la façon dont le signal électrique est élaboré en fonction des signaux mesurés par les récepteurs optiques, pourvu que ce traitement soit indépendant de la position angulaire de l'élément tournant.

Dans le cas d'émetteurs en anneau, les moyens de traitement supplémentaires, raccordés à cet au moins un récepteur optique de l'autre parmi le jeu fixe et le jeu tournant, peuvent être agencés pour élaborer un signal électrique à partir du ou des signaux électriques mesurés par le ou les récepteurs optiques de cet autre parmi le jeu fixe et le jeu tournant, et transmettre ce signal électrique vers un autre équipement solidaire de l'équipement sur lequel est monté cet autre parmi le jeu fixe et le jeu tournant.

Les émetteurs ou récepteurs d'un même jeu disposés en anneau peuvent être disposés en une seule rangée, ou bien encore sur deux rangées ou davantage.

Lorsque les émetteurs ou récepteurs d'un même anneau sont ainsi disposés sur plus d'une rangée, on pourra prévoir des décalages angulaires d'une rangée à l'autre. Ceci peut permettre de garantir la bonne réception des signaux quelle que soit la position angulaire de l'élément tournant.

Avantageusement, dans le cas de récepteurs (ou d'émetteurs) d'un même anneau disposés sur N rangées, N étant supérieur ou égal à deux, on peut prévoir un décalage d'une rangée à l'autre de la longueur (dans la direction de la circonférence de l'anneau) d'un récepteur (ou émetteur, respectivement), ou de la longueur occupée par un récepteur (ou émetteur, respectivement, divisée par N. Par exemple, dans le cas de deux rangées d'émetteurs optiques, chaque émetteur occupant 4 millimètres sur la circonférence, on pourra prévoir un décalage de 2 millimètres.

Le système de transfert de données peut comprendre plusieurs pluralités d'émetteurs ou récepteurs en anneau. Chaque pluralité peut correspondre à une voie, mais on peut aussi prévoir plusieurs pluralités en anneau pour une même voie (redondance matérielle).

On pourra avantageusement prévoir au moins deux pluralités d'émetteurs ou de récepteurs disposées à des hauteurs différentes, ainsi que au moins deux autres jeux fixe(s) ou tournant(s) correspondant.

On pourra prévoir une pluralité d'émetteurs et une pluralité de récepteurs disposées à des hauteurs différentes l'une de l'autre. Les communications peuvent ainsi être bidirectionnelles.

Le système peut ainsi comprendre
- une pluralité d'émetteurs optiques tournants, répartis en anneau sur l'élément tournant et solidaires de l'élément tournant, compris dans le jeu tournant par exemple,
- au moins un récepteur optique fixe monté sur et solidaire de l'élément fixe, disposé à une même hauteur que la pluralité d'émetteurs optiques tournants, compris dans le jeu fixe par exemple,
- une pluralité de récepteurs optiques tournants, répartis en anneau sur l'élément tournant et solidaires de l'élément tournant,
- au moins un émetteur optique fixe monté sur et solidaire de l'élément fixe, disposé à une même hauteur que la pluralité de récepteurs optiques tournants.

Avantageusement, la pluralité d'émetteurs ou de récepteurs disposés en anneau peut être choisie et disposée de sorte que le recouvrement lumineux des cônes d'émission ou de réception sur toute la circonférence de l'anneau soit supérieur à 30%, avantageusement à 40%, avantageusement à 50%. Ainsi, la transmission pourra être assurée même si un émetteur ou un récepteur de cette pluralité d'émetteurs ou de récepteurs disposés en anneau est défaillant.

Dans un mode de réalisation, les moyens de traitement et/ou les moyens de de traitement supplémentaires peu(ven)t comprendre des moyens numériques de traitement du signal, par exemple un ou plusieurs processeur(s).

Avantageusement, la pluralité de récepteurs de l'un parmi le jeu tournant et le jeu fixe peut être disposée en parallèle, chaque récepteur étant raccordé à un élément linéaire conducteur associé. La pluralité d'éléments linéaires conducteurs correspondant à cette pluralité de récepteurs peut être disposée en parallèle et se rejoindre en un jeu d'au moins un noeud.

Dans le cas de M noeuds, M étant supérieur ou égal à 2 et strictement inférieur au nombre de récepteurs de l'anneau, on pourra par exemple prévoir de raccorder à un même noeud tous les récepteurs occupant un arc de cercle de 360°/M sur la circonférence. Chaque noeud peut être lui-même raccordé à une entrée de moyens numériques de traitement.

Mais avantageusement, on prévoit un seul noeud pour la pluralité de récepteurs.

A chaque noeud dudit jeu correspond avantageusement une entrée de moyens numériques de traitement du signal. Ce (ou ces le cas échéant) noeud peut avantageusement être en amont de moyens numériques de traitement du signal. Dit autrement, les récepteurs sont câblés électriquement en parallèle.

La sommation des signaux électriques mesurés est ainsi particulièrement simple à mener, et on outre on s'affranchit d'éventuels phénomènes de diachronie, permettant de gagner en débit. En outre, on gagne en simplicité et en facilité d'adaptation, notamment lorsque le nombre de récepteurs évolue.

Dans un mode de réalisation avantageux, chaque élément linéaire conducteur raccorde directement le récepteur associé au noeud (correspondant dans le cas de plusieurs noeuds). Ceci peut permettre d'éviter d'affecter les signaux mesurés par des retards susceptibles de varier d'un récepteur à l'autre comme cela pourrait se produire dans le cas d'équipements électroniques disposés chacun entre le noeud et un récepteur associé. Chaque équipement introduirait un retard et la dispersion entre ces retards empêcherait de prévoir des communications avec des débits trop élevés.

Avantageusement, lorsque l'autre parmi le jeu tournant et le jeu fixe comprend plusieurs récepteurs, on pourra prévoir de disposer ces récepteurs en parallèle, chaque récepteur étant raccordé à un élément linéaire conducteur associé. La pluralité d'éléments linéaires conducteurs correspondant à cette pluralité de récepteurs peut être disposée en parallèle et se rejoindre en un noeud (ou bien entendu en un petit nombre de noeuds).

Ce noeud peut avantageusement être en amont de moyens numériques de traitement et correspondre à une entrée de ces moyens numériques de traitement.

Dans un mode de réalisation avantageux, chaque élément linéaire conducteur raccorde directement le récepteur associé au noeud.

Avantageusement, la pluralité d'émetteurs de l'un parmi le jeu tournant et le jeu fixe est disposée en série. Ainsi, on peut éviter les éventuels phénomènes de diachronie d'un émetteur à l'autre, permettant de transmettre des données avec des débits plus élevés. En outre, on gagne en simplicité et en facilité d'adaptation. Par exemple, il est relativement aisé de remplacer un ensemble d'émetteurs en série par un autre (ayant éventuellement un nombre d'émetteurs différent).

Avantageusement, lorsque l'autre parmi le jeu tournant et le jeu fixe comprend plusieurs émetteurs, on pourra prévoir de disposer ces émetteurs en série.

On peut prévoir des moyens de détection agencés pour détecter une défaillance d'un émetteur. Ces moyens de détection peuvent être en amont des émetteurs disposés en série, et comprendre par exemple des moyens de mesure de l'impédance d'une boucle comprenant ces émetteurs en série.

Dans un mode de réalisation, les moyens de détection, par exemple les moyens de traitement supplémentaires, sont raccordés électriquement à un ou des récepteur(s) en regard d'une pluralité d'émetteurs, et peuvent être agencés pour générer un message de signalement de défaillance émetteur en cas de non réception de signal, notamment lorsque des récepteurs disposés à une hauteur différente reçoivent effectivement des signaux.

En effet, et en particulier dans le cas d'émetteurs disposés en série, la défaillance d'un émetteur peut endommager tous les émetteurs de la pluralité d'émetteurs correspondante. La détection de cette défaillance et son signalement peuvent permettre de prendre les mesures appropriées, par exemple remplacer un ruban de LEDs.

Avantageusement, ces moyens de traitement supplémentaires peuvent être agencés pour transmettre en outre une valeur de position angulaire de l'élément tournant à l'instant de détection de la défaillance. Cette information peut faciliter les recherches de l'origine de la défaillance, notamment si on relève un même angle pour plusieurs défaillances. On pourra alors présumer que tel émetteur est régulièrement défaillant sur une série de rubans de LEDs donnée.

Dans un mode de réalisation, des moyens de détection de défaillance des récepteurs, par exemple intégrés aux moyens de traitement supplémentaires, sont agencés pour :
- effectuer une sommation dans le temps du (ou des) signal(aux) issu(s) du noeud (ou des noeuds), sur un lapse de temps correspondant à au moins un degré de déplacement angulaire de l'élément tournant, avantageusement à au moins une demi-période de rotation de l'élément tournant, par exemple sur 50 ms, 1 secondes, 2 secondes ou 3 secondes dans le cas d'une vitesse de rotation de 50 tours/minute, de façon à obtenir des valeurs mesurées moyennes,
- en cas de diminution significative d'une de ces valeurs mesurées moyennes par rapport aux autres, par exemple une diminution de plus de 3% ou 8%, par exemple lorsqu'il y a 20 ou 10 récepteurs respectivement, générer un message de suspicion de défaillance.

Ainsi, malgré l'éventuelle absence de moyens de détection (numériques ou analogiques) raccordés directement à chaque récepteur, il reste possible de détecter des défaillances éventuelles.

Dans un mode de réalisation non limitatif, chaque valeur mesurée moyenne est comparée à un seuil, et on considère qu'il y a diminution significative lorsqu'une (ou plusieurs valeurs mesurées moyennes consécutives) sont inférieures à ce seuil.

Avantageusement, ce seuil peut être fonction du nombre de détecteurs de l'anneau.

Avantageusement, ce seuil peut être fonction d'une valeur de mesure prédéterminée ou mesurée initialement.

Par exemple le seuil peut être choisi comme le produit de cette valeur initiale (correspondant à une situation de plein fonctionnement) et de (1-1/2Q), (1-2/3Q) ou bien encore (1-4/5Q), Q étant le nombre de récepteurs de l'anneau.

Dans un mode de réalisation non limitatif, on pourra conditionner la génération du message de suspicion de défaillance à des diminutions significatives réitérées à chaque période de rotation de l'élément tournant.

Avantageusement, on peut prévoir, notamment en cas de génération d'un message de suspicion de défaillance que :
(i) on effectue une sommation du (ou des) signal(aux) issu(s) du noeud (ou des noeuds) sur une durée comprise entre une centaine de périodes des signaux optiques (par exemple 0,1 µs dans le cas de communications optiques à 1 GHz) et un temps correspondant à un déplacement angulaire de deux fois la longueur (suivant la circonférence de l'anneau) occupée par un récepteur (par exemple 0,1 s dans le cas d'un élément tournant à 60 tours par minute et équipé d'un anneau de 20 récepteurs, de façon à obtenir une valeur mesurée moyennée sur une fenêtre courte,
(ii) on associe à cette valeur mesurée moyennée sur une fenêtre courte à une valeur de position angulaire de l'élément tournant lors des mesures correspondantes,
   - on réitère les étapes (i) et (ii) et on recherche quelle position angulaire correspond à un minimum de ces valeurs mesurées moyennées sur une fenêtre courte.

Ces étapes peuvent être effectuées par des moyens de détection de défaillance des récepteurs, par exemple intégrés aux moyens de traitement supplémentaires.

Il est ainsi possible d'identifier le récepteur défaillant. Dit autrement, on recherche à quelle position angulaire correspond une diminution du signal. Cette valeur de position angulaire peut être transmise à des fins de remplacement du récepteur correspondant.

Un tel procédé peut s'avérer particulièrement avantageux dans le cas de récepteurs en parallèle, raccordés à un noeud lui-même raccordé à une entrée de FPGA par exemple, car il permet de faire l'économie de moyens de détections dédiés à chaque noeud et d'éviter les retards qui seraient introduits.

Ces étapes (i), (ii), leur réitération et la recherche d'un minimum peuvent être effectuées par exemple seulement en cas de génération d'un message de suspicion de défaillance.

Mais alternativement, on pourra prévoir de les exécuter même en l'absence d'un tel message. La détection des défaillances récepteur pourrait par exemple être menée en effectuant de façon réitérée les étapes (i) et (ii), par exemple toutes les ms ou µs dans le cas d'une fenêtre courte de 1 à 10 µs. En cas de détection d'un minimum significatif, on génère directement un message signalant une défaillance pour l'angle (ou une plage d'angles) correspondant à ce minimum.

Avantageusement, les moyens de traitement et/ou les moyens de de traitement supplémentaires peu(ven)t respectivement comprendre des moyens de raccordement à une pluralité de groupes d'au moins une voie filaire, pour recevoir une pluralité de flux de données respectifs, chaque flux étant issu d'un appareil correspondant, par exemple des bus d'entrée, des ports d'entrée, ou autre. Chaque appareil peut être installé sur l'élément fixe ou tournant le cas échéant.

Les moyens numériques de traitement du signal peuvent être agencés pour élaborer un flux à transmettre vers un jeu d'au moins un émetteur raccordés électriquement auxdits moyens numériques de traitement, en vue d'une émission optique, en fonction des flux de données reçus.

Par exemple, les moyens numériques de traitement du signal peuvent être agencés pour affecter à chaque flux reçu une valeur de paramètre de priorité, et en cas de réception concomitante de plusieurs flux, comparer les valeurs du paramètre de priorité associées aux flux reçus et transmettre en priorité vers le ou les émetteurs optiques, le flux associé à la valeur du paramètre de priorité correspondant au degré de priorité le plus élevé.

Le système peut ainsi être installé dans un ensemble conçu par des tiers, avec un nombre de sources variable et/ou des protocoles de communication déjà en place.

On pourra en outre prévoir que les moyens numériques de traitement du signal soient programmés pour extraire des flux reçus des données utiles, et pour encapsuler les données utiles ainsi extraites dans des trames conformes à un protocole de communication optique sans fil.

Avantageusement, les moyens de traitement peuvent être programmés pour traiter les données à transmettre, par exemple les données utiles extraites, de sorte que les données correspondant au signal électrique généré présentent une redondance (par exemple un codage correcteur d'erreurs, par exemple Reed-Salomon, ou autre).

Les moyens de traitement supplémentaire peuvent alors être programmés pour décoder les données correspondant aux signaux électriques reçus afin de s'assurer de l'intégrité des données. Ceci peut permettre de détecter et/ou pallier à des défaillances.

Les moyens de traitement supplémentaires peuvent alors être programmés pour effectuer des diagnostics à partir des détections éventuelles,

Les moyens de traitement et/ou les moyens de traitement supplémentaires peuvent être programmés pour mettre en place des modes dégradés de fonctionnement, garantissant un service minimal du système de communication.

Les moyens de traitement et/ou les moyens numériques de traitement peuvent par exemple comprendre un FPGA (de l'anglais « Field Programmable Gate Array », ou autre).

Dans un mode de réalisation, dans lequel le système comprend au moins deux pluralités d'émetteurs ou récepteurs en anneau, chaque jeu d'émetteur(s) envoie des signaux optiques avec une longueur d'onde associée.

Alternativement, lorsque système comprend, pour chaque voie parmi au moins deux voies, au moins deux pluralités d'émetteurs ou récepteurs en anneau pour cette voie, tous les émetteurs correspondant à une même voie peuvent émettre des signaux optiques avec une longueur d'onde associée.

L'invention n'est en rien limitée par ces choix de longueurs d'ondes distinctives. On pourra tout à fait prévoir d'utiliser les mêmes longueurs d'onde pour les communications montantes et descendantes et/ou d'une voie à l'autre (ou d'une pluralité en anneau à l'autre).

Dans un mode de réalisation, le système peut comprendre des moyens de filtrage (optiques ou électroniques). Ceci peut permettre d'éliminer des signaux non pertinents.

En particulier, lorsque le système comprend au moins deux pluralités d'émetteurs ou récepteurs en anneau et met en oeuvre au moins deux longueurs d'onde différentes, le système peut comprendre des moyens de filtrage autour de chacune de ces longueurs d'onde.

Les moyens de filtrage peuvent par exemple comprendre un verre coloré, ou bien encore des moyens analogiques ou numériques de traitement.

On pourra en outre prévoir un cache autour du ou des émetteurs pour absorber en partie un surplus lumineux.

Le système décrit ci-dessus peut comprendre en outre un boîtier pour recevoir les jeux fixes et tournants. Ce boitier peut avantageusement présenter un revêtement absorbant.

Le système de transfert de données peut être agencé pour être installé dans une éolienne, ou autre.

L'invention n'est en rien limitée par le type d'OWC mis en oeuvre. On pourra par exemple prévoir une communication sans fil par infrarouge, par Li-Fi, par VLC (de l'anglais « Visible Light Communications »), ou autre. Les communications pourront par exemple être conformes aux normes IrDA, IEEE 802.15.7, ou autre.

Les émetteurs optiques peuvent par exemple comprendre des diodes, par exemple électroluminescentes ou LED (de l'anglais « Light Emitting Diode »), laser, ou autre.

Les récepteurs optiques peuvent comprendre des photodiodes, ou bien encore des capteurs d'image, par exemple des capteurs CMOS (pour « Complementary Metal-Oxyde Semiconductor » en anglais).

Il est en outre proposé un ensemble comprenant un élément tournant, un élément fixe, et le système de transfert de données décrit ci-dessus. Cet ensemble peut être intégré dans une éolienne, ou non.

Il est aussi proposé une éolienne comprenant cet ensemble. L'élément tournant peut comprendre l'arbre de la partie tournante, être solidaire de cet arbre ou bien encore être entrainé en mouvement par cet arbre.

Les fréquences utilisées pour les communications optiques peuvent être supérieures à 10 Mhz, avantageusement supérieures à 100 MHz.

Les fréquences utilisées pour les communications optiques peuvent être dans une plage entre 1 Mégahertz et 60 Gigahertz, avantageusement entre 100 Mégahertz et 10 Gigahertz, par exemple de l'ordre du Gigahertz.

Les débits mis en oeuvre peuvent être supérieurs à 5 mégabits par seconde, avantageusement supérieurs à 100 mégabits par seconde.

Les débits mis en oeuvre peuvent être par exemple dans une plage entre 100 kilobits par seconde par seconde et 20 gigabits, avantageusement entre 50 mégabits par seconde et 5 gigabits par seconde, par exemple de l'ordre du gigabit par seconde.

On pourra par exemple prévoir une transmission en base de base.

On pourra prévoir un codage, par exemple un codage Manchester ou autre.

L'invention n'est pas limitée par le choix d'une modulation particulière. On pourra avoir recours à une modulation OOK (de l'anglais « On-Off Keying »), ou autre.

L'invention sera mieux décrite en référence aux figures ci-après, lesquelles représentent un mode de réalisation donné à titre d'exemple et non limitatif.
La figure 1 montre schématiquement un exemple d'ensemble d'éolienne selon un mode de réalisation de l'invention.
La figure 2 montre schématiquement et de perspective un exemple de système de transfert de données selon un mode de réalisation de l'invention.
La figure 3 est une vue de coupe du système de la figure 2.
La figure 4 est une vue de côté du système de la figure 2.
La figure 5 montre les cônes d'émission d'émetteurs en anneau montés sur un arbre tournant.
La figure 6 montre schématiquement une partie d'un exemple de système selon un autre mode de réalisation de l'invention.
La figure 7 montre schématiquement deux configurations d'un exemple de système selon un mode de réalisation de l'invention.
La figure 8 est une représentation en blocs d'un exemple de système selon un mode de réalisation de l'invention.
La figure 9 représente schématique un élément fixe ou un élément tournant d'un exemple de système selon un mode de réalisation de l'invention.

Des références identiques peuvent être utilisées d'une figure à l'autre pour désigner des éléments identiques ou similaires.

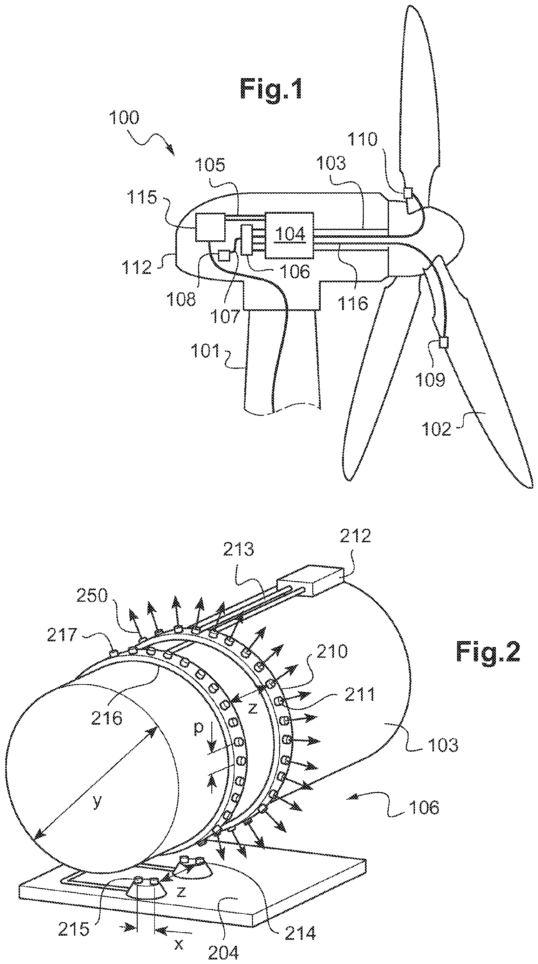

En référence à la figure 1, une éolienne 100 comprend un mât 101, une nacelle 112 et des pales 102 solidarisées à un arbre dit lent 103.

Un multiplicateur 104 permet de convertir le mouvement de rotation de l'arbre lent 103 en un mouvement plus rapide d'un arbre dit rapide 105.

Un générateur 115 permet de générer du courant à partir du mouvement de cet arbre rapide 105.

L'éolienne est équipée de capteurs, par exemple des capteurs de vibration ou autre, dont un seul 109 est représenté ici à des fins de clarté. Un superviseur 108, comprenant par exemple un ou plusieurs processeur(s), reçoit des signaux issus de ces capteurs et commande en conséquence des actionneurs, par exemple un moteur 110 pour modifier l'orientation des pales 102.

Les appareils 109, 110 sont ainsi solidaires des pales, tandis que le processeur reste fixe.

Des câbles 116 raccordés aux capteurs ou aux actionneurs sont installés à l'intérieur de l'arbre lent 103. Pour plus de clarté, on a représenté seulement deux câbles, mais en réalité à chaque appareil 109, 110, correspond un groupe d'un ou plusieurs fils raccordant cet appareil à un système de transfert de signaux ou STS schématiquement représenté et référencé 106.

Le STS 106 est situé à proximité du multiplicateur 104 et couplé mécaniquement à l'arbre lent 103. Le STS 106 est raccordé au superviseur par un groupe d'une ou plusieurs voies filaires, dont une seule 107 est ici représentée à des fins de clarté.

Des câbles supplémentaires et non représentés permettent de transférer de la puissance entre le STS 106 et le moteur 110 d'orientation des pales.

En référence à la figure 2, on a représenté le système de transfert 106. Ce système 106 permet de transférer des données entre un élément tournant, ici l'arbre lent 103, et un élément fixe 204, ici un élément solidaire de la nacelle.

L'arbre lent 103 est soumis à des vibrations, et à des variations thermiques sur une plage allant de -40°C à + 100°C.

Le système 106 représenté définit une voie de communications descendante, de transfert de signaux de la partie fixe 204 vers l'arbre 103, et une voie ascendante, de transfert de signaux de l'arbre lent 103 vers un processeur installé dans la nacelle.

Le système comprend un ruban 210 de plusieurs dizaines de LEDS 211 monté autour de l'arbre lent 103, de façon à former un anneau d'émetteurs 211, pour assurer avec des photodiodes 214 les communications suivant la voie ascendante. De façon connue en soi, chaque LED 211 intègre des moyens de conversion optique-électrique et reçoit un signal électrique qu'elle transforme en signal optique.

Un dispositif de traitement 212, par exemple un FPGA, élabore un signal électrique à partir de signaux issus de capteurs (non représentés sur la figure 2) de la partie rotative de l'éolienne. Ce signal électrique est transmis par un (ou plusieurs) fil conducteur 213 à toutes les LEDs 211, lesquelles émettent alors simultanément le même signal optique.

Les émissions optiques sur cette voie ascendante sont donc omnidirectionnelles, comme symboliquement représenté par les flèches 250.

De façon connue en soi, on pourra avoir recours à un codage Manchester, une modulation OOK (de l'anglais « On-Off Keying »), ou autre. Les débits peuvent être par exemple de 1 Gigabit par seconde, et la fréquence de porteuse optique de 5 Gigahertz par exemple.

Dans ce mode de réalisation, deux récepteurs optiques 214, par exemple des photodiodes, sont disposés à la même hauteur, suivant la direction de rotation de l'arbre lent 103, que le ruban 210. Le ruban 210 étant dans un plan normal à la direction de rotation, les photodiodes 214 sont dans le plan défini par ce ruban 210.

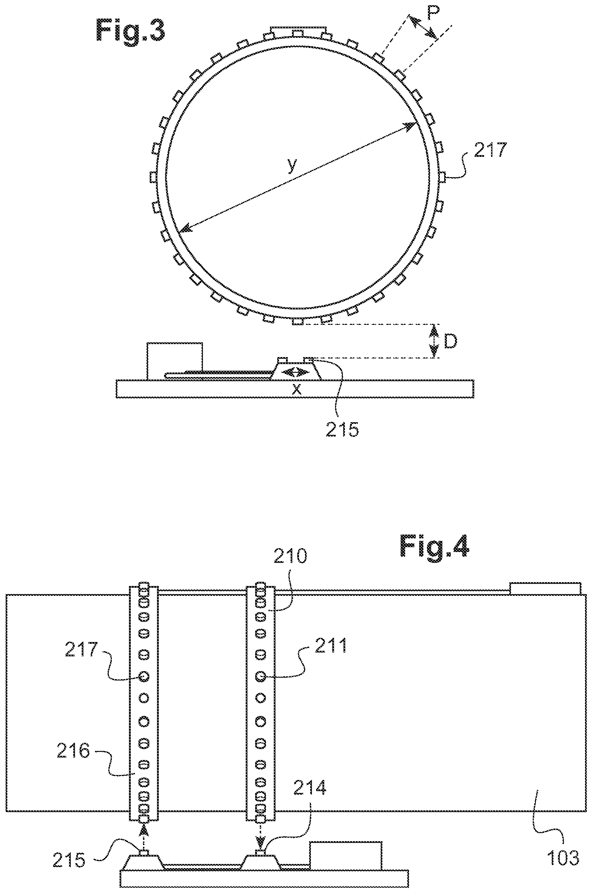

Ces photodiodes 214 reçoivent les signaux optiques des émetteurs 211 en regard d'elles-mêmes, comme illustré par la figure 4. La vitesse de rotation de l'arbre 103 peut être variable, et éventuellement élevée, mais les émissions optiques étant omnidirectionnelles et la vitesse de la lumière considérablement plus élevée que la vitesse de l'arbre, l'absence de connaissance a priori de la position angulaire de l'arbre a une influence dérisoire sur la qualité de la transmission.

Les signaux électriques mesurés par les photodiodes 214 sont sommés entre eux, et le signal électrique résultant est envoyé vers un processeur installé dans la partie fixe de l'éolienne, par exemple un FPGA.

Concernant la voie descendante, deux LEDs 215 solidaires de la partie fixe 204 sont disposées en face d'un deuxième ruban 216 de photodiodes 217.

Un processeur non représenté, par exemple le FPGA de la partie fixe, envoie un signal électrique à transmettre à ces LEDs 215, et certaines au moins des photodiodes 217, à savoir celles qui sont en regard de ces LEDs 215, reçoivent alors des signaux optiques.

En aval des photodiodes 217, sur l'arbre tournant, un processeur non représenté, par exemple intégré au FPGA 212, somme tous les signaux électriques issus des photodiodes 217 de façon à reconstituer le signal électrique envoyé aux LEDs 215.

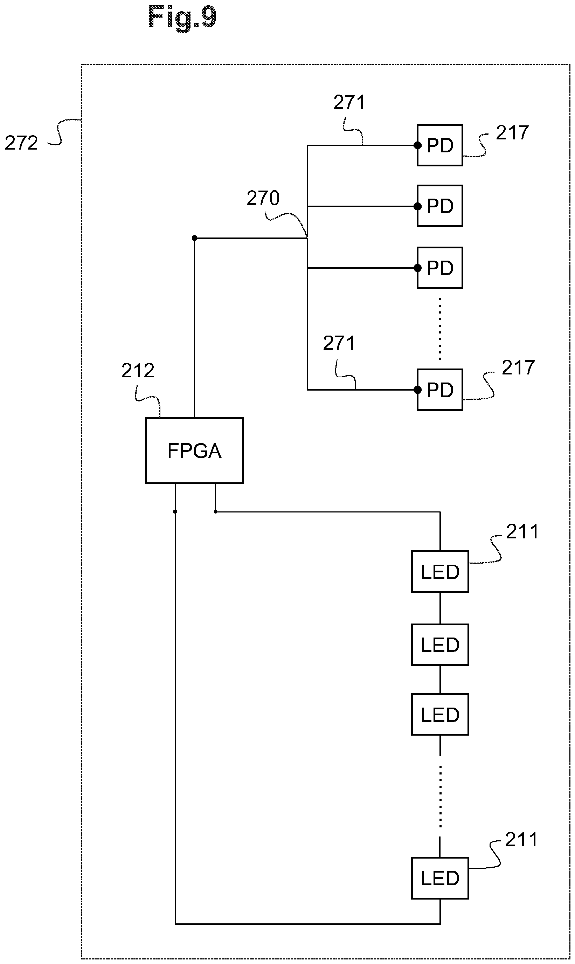

Toutefois, dans un mode de réalisation alternatif, on pourra prévoir d'effectuer cette sommation par des moyens analogiques, avantageusement par un simple câblage en parallèle comme dans le mode de réalisation de la figure 9.

On choisira le nombre de LEDs 211 et de photodiodes 217 en fonction du diamètre y de l'arbre (figures 2 et 3), du nombre de photodiode(s) 214 et de LEDs 215, respectivement, en regard des rubans correspondant, et des caractéristiques optiques de ces composants 211, 217, 214, 215.

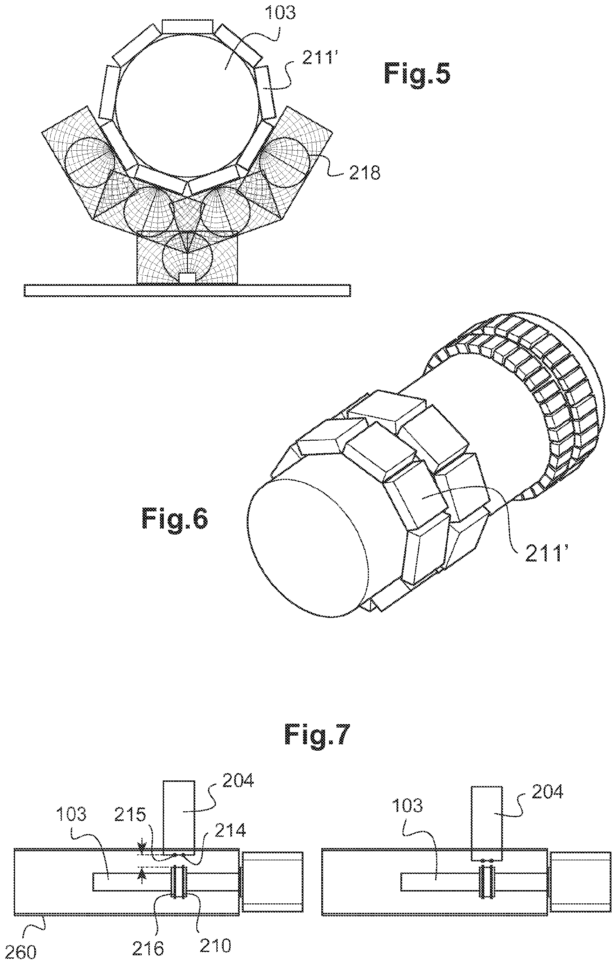

Si, comme représenté sur la figure 5, des LEDs 211' ont un cône d'émission 218 relativement peu étendu et que le nombre de LEDs 211' est restreint, on risque de limiter sérieusement ou d'anéantir le transfert des données pour certaines positions angulaires de l'arbre 103.

Aussi, et en particulier s'il n'est pas possible de jouer sur la distance p entre LEDs comme sur les figures 2 à 4 du fait des dimensions des LEDs 211', on pourra prévoir de disposer ces LEDS 211' en deux rangées, avec des décalages, comme illustré par la figure 6.

On pourra aussi prévoir d'avoir recours à une première longueur d'onde pour les communications suivant la voie ascendante et à une deuxième longueur d'onde, différente de la première, pour les communications sur la voie descendantes.

Les moyens de traitement en aval des photodiodes peuvent intégrer des filtres numériques centrés chacun autour de la longueur d'onde attendue.

Pour un arbre lent 103 ayant un diamètre y entre 10 et 20 millimètres, par exemple de 15 millimètres, on pourra prévoir d'écarter les rubans 210, 216 d'une hauteur z de l'ordre du millimètre ou du centimètre par exemple; la distance p entre deux émetteurs ou récepteurs sur un même ruban peut par exemple être comprise entre 0,05 mm et 0,3 mm, par exemple 0,1 ou 0,2 mm ; la distance x entre les émetteurs fixes 215 ou les récepteurs fixes 214 peut être de l'ordre du millimètre ou autre; enfin, la distance D entre un jeu fixe 214, 215 et le jeu tournant correspondant 210, 216 peut par exemple être de l'ordre du millimètre ou du centimètre, par exemple 2 ou 3 millimètres.

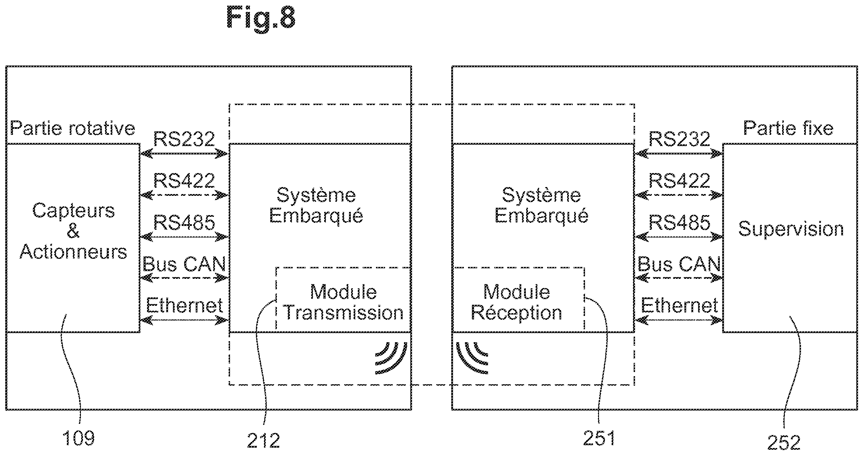

En référence à la figure 8, on a représenté plusieurs voies, avec divers protocoles (Ethernet, RS232, etc.) pour recueillir des mesures issues de capteurs 109 sur la partie rotative de l'éolienne.

L'invention n'est pas limitée par les protocoles de communication mis en oeuvre sur les voies filaires. On pourra par exemple citer RS232, RS422, RS485, Bus CAN (de l'anglais « Controller Area Network »), Ethernet, ProfiBus (de l'anglais « Process Field Bus »), Modbus, Interbus.

A un protocole donné, est associé un groupe de voie(s) comprenant un nombre défini de voies, par exemple trois voies pour le protocole RS232, deux ou quatre voies pour le protocole RS485, deux voies pour le CAN bus, et cinq voies pour l'Ethernet.

Un module de transmission, par exemple le FPGA 212, reçoit ces flux et, affecte à chaque flux reçu une valeur de paramètre de priorité. Par exemple les données issues d'un bus CAN peuvent être considérées comme moins prioritaires que les données Ethernet.

En cas de réception concomitante de plusieurs flux, le FPGA 212 compare les valeurs du paramètre de priorité associées aux flux reçus et transmets en priorité les émetteurs optiques du ruban 210 le flux associé à la valeur du paramètre de priorité correspondant au degré de priorité le plus élevé.

Les données reçues par le FPGA sont structurées en messages, avec divers champs (identifiant de protocole, date, etc.). Le FPGA extrait des données reçues les données utiles (valeurs mesurées, identifiant du capteur, etc.) et encapsule ces données utiles dans de nouveaux messages, conformes à un protocole de communication sans fil, par exemple Li-Fi.

Le signal électrique ainsi généré est envoyé vers les émetteurs du ruban 210 disposés en série, comme illustré sur la figure 9.

Sur la partie fixe, une photodiode (ou plusieurs) en regard du ruban d'émetteurs reçoit un signal optique et transmets en conséquence un signal électrique reçu à un convertisseur numérique analogique en amont d'un FPGA 251 installé sur la partie fixe.

Ce FPGA 251 extrait les données utiles du signal numérique issu de la photodiode, les encapsule suivant un protocole choisi en fonction par exemple d'un identifiant de capteur et les envoie vers un dispositif de supervision 252 en ayant recours à un flux correspondant au protocole choisi.

Le dispositif de supervision peut par exemple comprendre un processeur raccordé à un ordinateur au sol, ou en communication avec un module de communication radiofréquences pour une communication avec le sol ou avec un équipement distant.

Ce processeur peut recevoir ou élaborer à partir simplement des signaux issus des capteurs 109 un signal de commande destiné à des actionneurs présents sur la partie tournante.

Ce signal de commande est alors transmis en utilisant une LED en regard d'un ruban de photodiodes.

En référence à la figure 7, un récepteur fixe 214 et un émetteur fixe 215 sont montés sur une partie fixe 204, en regard respectivement d'un ruban 210 d'émetteurs et d'un ruban 216 de récepteurs montés sur un arbre 103.

L'arbre tournant 103 est en partie reçu dans un boîtier 260, fixe relativement à l'arbre.

La partie fixe 204 est en partie reçue dans le boîtier 260.

Le boitier 260 définit une ouverture pour le passage de l'arbre 103, suffisamment étendue pour ne pas entraver la rotation de l'arbre 103, et une autre ouverture pour le passage de la partie fixe. Cette autre ouverture est suffisamment étendue pour autoriser un mouvement de la partie fixe vers l'arbre, de façon à réduire la distance D si nécessaire, comme illustré sur la figure 7.

L'intérieur du boitier 260 est revêtu d'un revêtement absorbant, afin d'éviter toute réverbération des signaux lumineux et les signaux parasites résultants de ces réverbérations.

En référence à la figure 9, un élément tournant (ou fixe) 272 comprend une pluralité de récepteurs optiques 217 disposés en anneau, ainsi qu'une pluralité d'émetteurs 211 également disposés en anneau, les deux anneaux étant distants l'un de l'autre.

Cette disposition an anneau n'a pas été reprise sur la figure 9 afin d'en faciliter la lecture.

On comprendra toutefois que les émetteurs 211 sont disposés en série, et qu'un FPGA 212 envoie un signal transmis à l'ensemble des émetteurs 211 en série.

Les récepteurs 217 sont câblés en parallèles, chaque récepteur 217 étant raccordé à un fil correspondant 271.

Les fils 217 se rejoignent un en noeud 270. Pour chacun des récepteurs, aucun composant n'est installé entre ce récepteur et le noeud. On évite ainsi les retards qui seraient induits par des filtres passe-bas ou autres composants.

Le noeud 270 est lui-même raccordé à une entrée du FPGA 212. Le FPGA 212 reçoit donc un seul signal, résultat d'une sommation sur l'ensemble des récepteurs des signaux de chacun de ces récepteurs.

## Revendications

1. Système de transfert de données à au moins une voie entre un élément tournant (103) et un élément fixe (204) par communication optique sans fil, comprenant, pour chaque voie :
- un jeu tournant d'au moins un émetteur (211) ou récepteur (217) optique tournant, monté sur et solidaire de l'élément tournant,
- un jeu fixe d'au moins un récepteur (214) ou émetteur (215) optique fixe, monté sur et solidaire de l'élément fixe,
- des moyens de traitement (212) en communication avec ledit au moins un émetteur du jeu tournant ou du jeu fixe le cas échéant,
dans lequel
l'un parmi le jeu tournant et le jeu fixe comprend une pluralité d'émetteurs (211) ou récepteurs (217) optiques répartis en anneau (210, 216) autour de l'élément tournant,
l'autre parmi le jeu tournant et le jeu fixe comprend au moins un récepteur (214) ou émetteur (215) optique disposé sensiblement à une même hauteur par rapport à l'axe de rotation de l'élément tournant, que la pluralité d'émetteurs ou récepteurs optiques répartis en anneau,
les jeux fixe et tournant sont agencés de sorte que quelque soit la position angulaire de l'élément tournant, le cas échéant ledit au moins un récepteur optique de l'autre parmi le jeu tournant et le jeu fixe reçoive des signaux optiques émis par au moins un émetteur de ladite pluralité d'émetteurs optiques répartis en anneau, ou au moins un récepteur de ladite pluralité de récepteurs optiques répartis en anneau reçoive des signaux optiques émis par au moins un émetteur optique de l'autre parmi le jeu tournant et le jeu fixe,
les moyens de traitement sont agencés pour générer indépendamment de la position angulaire de l'élément tournant un signal électrique et pour transmettre vers ledit au moins un émetteur du jeu tournant ou du jeu fixe le cas échant ledit signal électrique de sorte que s'il y a plus d'un émetteur dans ce _jeu, ces émetteurs émettent simultanément le même signal optique,
et **caractérisé en ce que** à l'un parmi le jeu tournant et le jeu fixe comprend une pluralité d'émetteurs optiques installés en série.

2. Système de transfert de données selon la revendication 1, dans lequel
la pluralité d'émetteurs (211) ou de récepteurs (217) disposés en anneau est choisie et disposée de sorte que le recouvrement lumineux des cônes d'émission ou de réception soit supérieur à 30% sur toute la circonférence de l'anneau.

3. Système de transfert de données selon la revendication 1 ou 2, dans lequel
le jeu tournant comprend une pluralité d'émetteurs optiques tournants (211), répartis en anneau sur l'élément tournant et solidaires de l'élément tournant, et
le jeu fixe comprend au moins un récepteur optique fixe (214) monté sur et solidaire de l'élément fixe, disposé à une même hauteur que la pluralité d'émetteurs optiques tournants (211).

4. Système de transfert de données selon la revendication 3, comprenant en outre
une pluralité de récepteurs optiques tournants (217), répartis en anneau sur l'élément tournant et solidaires de l'élément tournant,
au moins un émetteur optique fixe (215) monté sur et solidaire de l'élément fixe, disposé à une même hauteur que la pluralité de récepteurs optiques tournants (217).

5. Système de transfert de données selon la revendication 4, dans lequel
les émetteurs (211) de la pluralité d'émetteurs optiques tournants répartis en anneau émettent à une longueur d'onde différente de la longueur d'onde du au moins un émetteur optique fixe (215).

6. Système de transfert de données selon l'une quelconque des revendications 1 à 5, dans lequel
les moyens de traitement (212) comprennent des moyens numériques de traitement du signal, et des moyens de raccordement à une pluralité de groupes d'au moins une voie filaire, pour recevoir une pluralité de flux de données respectifs, chaque flux étant issu d'un appareil correspondant.

7. Système selon la revendication 6, dans lequel les moyens numériques de traitement du signal (212) sont agencés pour affecter à chaque flux reçu une valeur de paramètre de priorité, et en cas de réception concomitante de plusieurs flux, comparer les valeurs du paramètre de priorité associées aux flux reçus et transmettre en priorité vers le ou les émetteurs optiques, le flux associé à la valeur du paramètre de priorité correspondant au degré de priorité le plus élevé.

8. Système de transfert selon l'une quelconque des revendications 1 à 7, comprenant en outre des moyens de détection, raccordés électriquement à un ou des récepteur(s) en regard de la pluralité d'émetteurs en série, lesdits moyens de détection étant agencés pour générer un message de signalement de défaillance émetteur en cas de non réception de signal.

9. Système de transfert de données selon l'une quelconque des revendications 1 à 8, dans lequel
l'un parmi le jeu tournant et le jeu fixe comprend une pluralité de récepteurs disposés en parallèle, chaque récepteur étant raccordé à un élément linéaire conducteur associé,
la pluralité d'éléments linéaires conducteurs correspondant à cette pluralité de récepteurs est disposée en parallèle et se rejoint en un jeu d'au moins un noeud,
et à chaque noeud dudit jeu correspond une entrée de moyens numériques de traitement du signal.

10. Système selon la revendication 9, dans lequel des moyens de détection de défaillance des récepteurs sont agencés pour :
- effectuer une sommation dans le temps du (ou des) signal(aux) issu(s) du noeud (ou des noeuds), sur un lapse de temps correspondant à au moins un degré de déplacement angulaire de l'élément tournant, de façon à obtenir des valeurs mesurées moyennes,
- en cas de diminution significative d'une de ces valeurs mesurées moyennes par rapport aux autres, générer un message de suspicion de défaillance.

11. Système selon la revendication 9 ou 10, dans lequel les moyens de détection de défaillance des récepteurs sont agencés pour, notamment en cas de génération d'un message de suspicion de défaillance :
(i) effectuer une sommation du (ou des) signal(aux) issu(s) du noeud (ou des noeuds) sur une durée comprise entre une centaine de périodes des signaux optiques et un temps correspondant à un déplacement angulaire de deux fois la longueur (suivant la circonférence de l'anneau) occupée par un récepteur, de façon à obtenir une valeur mesurée moyennée sur une fenêtre courte,
(ii) associer à cette valeur mesurée moyennée sur une fenêtre courte à une valeur de position angulaire de l'élément tournant lors des mesures correspondantes,
- réitérer les étapes (i) et (ii) et rechercher quelle position angulaire correspond à un minimum de ces valeurs mesurées moyennées sur une fenêtre courte.

12. Système de transfert de données selon l'une quelconque des revendications 1 à 11, dans lequel la pluralité d'émetteurs (211) ou récepteurs (217) optiques répartis en anneau est disposée en plusieurs rangées d'émetteurs ou récepteurs décalés les uns par rapport aux autres.

13. Système de transfert de données selon l'une quelconque des revendications 1 à 12, dans lequel les communications optiques sans fil ont lieu par Li-Fi.

14. Ensemble comprenant un élément tournant (103), un élément fixe (204), et le système de transfert de données selon l'une quelconque des revendications 1 à 13.

15. Eolienne comprenant l'ensemble selon la revendication 14.

## Patentansprüche

1. Datenübertragungssystem mit mindestens einem Weg zwischen einem drehenden Element (103) und einem festen Element (204) durch drahtlose optische Kommunikation, umfassend für jeden Weg:
- einen drehenden Satz mit mindestens einem drehenden optischen Sender (211) oder Empfänger (217), der auf dem drehenden Element angebracht und fest damit verbunden ist,
- einen festen Satz mit mindestens einem festen optischen Empfänger (214) oder Sender (215), der auf dem festen Element angebracht und fest damit verbunden ist,
- Bearbeitungsmittel (212) in Kommunikation mit dem mindestens einen Sender gegebenenfalls des drehenden Satzes oder des festen Satzes,
wobei
einer aus dem drehenden Satz und dem festen Satz eine Vielzahl von ringförmig (210, 216) um das drehende Element verteilten optischen Sendern (211) oder Empfängern (217) umfasst,
der andere aus dem drehenden Satz und dem festen Satz mindestens einen optischen Empfänger (214) oder Sender (215) umfasst, der im Wesentlichen auf einer gleichen Höhe in Bezug auf die Drehachse des drehenden Elements angeordnet ist, wie die Vielzahl von ringförmig verteilten optischen Sendern oder Empfängern,
wobei der feste und drehende Satz angeordnet sind, sodass gegebenenfalls, unabhängig von der Winkelposition des drehenden Elements, der mindestens eine optische Empfänger des anderen aus dem drehenden Satz und dem festen Satz optische Signale empfängt, die von mindestens einem Sender der Vielzahl von ringförmig verteilten optischen Sendern gesendet werden, oder mindestens ein Empfänger der Vielzahl von ringförmig verteilten optischen Empfängern optische Signale empfängt, die von mindestens einem optischen Sender des anderen aus dem drehenden Satz und dem festen Satz gesendet werden,
die Bearbeitungsmittel angeordnet sind, um unabhängig von der Winkelposition des drehenden Elements ein elektrisches Signal zu erzeugen, und um zum mindestens einen Sender des drehenden Satzes oder des festen Satzes gegebenenfalls das elektrische Signal zu übertragen, sodass, wenn in diesem Satz mehr als ein Sender vorhanden ist, diese Sender gleichzeitig dasselbe optische Signal senden,
und **dadurch gekennzeichnet, dass** der eine aus dem drehenden Satz und dem festen Satz eine Vielzahl von in Reihe installierten optischen Sendern umfasst.

2. Datenübertragungssystem nach Anspruch 1, wobei die Vielzahl von ringförmig angeordneten Sendern (211) oder Empfängern (217) ausgewählt und angeordnet sind, sodass die Leuchtabdeckung der Sende- oder Empfangskonen über den gesamten Umfang des Ringes größer als 30% ist.

3. Datenübertragungssystem nach Anspruch 1 oder 2, wobei
der drehende Satz eine Vielzahl von drehenden optischen Sendern (211) umfasst, die ringförmig auf dem drehenden Element verteilt, und fest mit dem drehenden Element verbunden sind, und
der feste Satz mindestens einen festen optischen Empfänger (214) umfasst, der am festen Element angebracht, und fest damit verbunden ist, der auf einer gleichen Höhe wie die Vielzahl von drehenden optischen Sendern (211) angeordnet ist.

4. Datenübertragungssystem nach Anspruch 3, weiter umfassend
eine Vielzahl von drehenden optischen Empfängern (217), die ringförmig auf dem drehenden Element verteilt, und fest mit dem drehenden Element verbunden sind,
mindestens einen festen optischen Sender (215), der an dem festen Element angebracht, und fest damit verbunden ist, der auf einer gleichen Höhe wie die Vielzahl von drehenden optischen Empfängern (217) angeordnet ist.

5. Datenübertragungssystem nach Anspruch 4, wobei
die Sender (211) der Vielzahl von ringförmig verteilen drehenden optischen Sendern mit einer anderen Wellenlänge als der Wellenlänge des mindestens einen festen optischen Empfängers (215) senden.

6. Datenübertragungssystem nach einem der Ansprüche 1 bis 5, wobei
die Bearbeitungsmittel (212) numerische Signalbearbeitungsmittel und Mittel zum Anschließen an eine Vielzahl von Gruppen mit mindestens einem verdrahteten Weg umfassen, um eine Vielzahl von jeweiligen Datenströmen zu empfangen, wobei jeder Strom aus einem entsprechenden Gerät stammt.

7. System nach Anspruch 6, wobei die numerischen Bearbeitungsmittel des Signals (212) angeordnet sind, um jedem empfangenen Strom einen parametrierten Vorzugswert zuzuweisen, und im Falle eines gleichzeitigen Empfangs mehrerer Ströme die Werte des den empfangenen Strömen zugewiesenen Vorzugsparameters zu vergleichen, und zu dem oder den optischen Sender(n) bevorzugt den Strom weiterzuleiten, der dem Wert des Vorzugsparameters zugeordnet ist, der dem höchsten Vorzugsgrad entspricht.

8. Übertragungssystem nach einem der Ansprüche 1 bis 7, weiter Erkennungsmittel umfassend, die elektrisch an (einen) Sender gegenüber der Vielzahl von Sendern in Reihe angeschlossen sind, wobei die Erkennungsmittel angeordnet sind, um im Falle eines Nicht-Empfangs eines Signals eine Nachricht zum Melden eines Senderausfalls zu erzeugen.

9. Datenübertragungssystem nach einem der Ansprüche 1 bis 8, wobei
einer aus dem drehenden Satz und dem festen Satz eine Vielzahl von parallel angeordneten Empfängern umfasst, wobei jeder Empfänger an ein zugeordnetes lineares Leiterelement angeschlossen ist,
die Vielzahl von linearen Leiterelementen, die dieser Vielzahl von Empfängern entspricht, parallel angeordnet sind, und sich in einem Satz mit mindestens einem Knoten treffen,
und jedem Knoten des Satzes ein Eingang numerischer Mittel zum Bearbeiten des Signals entspricht.

10. System nach Anspruch 9, wobei die Erkennungsmittel eines Senderausfalls angeordnet sind, um:
- eine Summierung mit der Zeit des (oder der) Signals (-e) aus dem (den) Knoten über eine Zeitspanne hinweg durchzuführen, die mindestens einem Winkelfortbewegungsgrad des drehenden Elements entspricht, um gemessene Durchschnittswerte zu erhalten,
- im Falle einer signifikanten Verringerung eines dieser gemessenen Durchschnittswerte in Bezug zu anderen eine Nachricht über einen Ausfallsverdacht zu erzeugen.

11. System nach Anspruch 9 oder 10, wobei die Erkennungsmittel eines Senderausfalls angeordnet sind, um insbesondere im Falle einer Erzeugung einer Nachricht über einen Ausfallsverdacht:
(i) eine Summierung des (oder der) Signals (-e) aus dem (den) Knoten über eine Dauer hinweg durchzuführen, die zwischen etwa hundert Perioden der optischen Signale und einer Zeit liegen, die einer Winkelfortbewegung vom Doppelten der Länge (dem Umfang des Ringes folgend) entspricht, die von einem Empfänger eingenommen wird, um einen über ein kurzes Fenster gemittelten Messwert zu erhalten,
(ii) diesem über ein kurzes Fenster gemittelten Messwert einen Winkelpositionswert des drehenden Elements bei den entsprechenden Messungen zuzuordnen,
- die Schritte (i) und (ii) zu wiederholen und zu suchen, welche Winkelposition einem Mindestwert dieser über ein kurzes Fenster gemittelten Messwerte entspricht.

12. Datenübertragungssystem nach einem der Ansprüche 1 bis 11, wobei die Vielzahl von ringförmig verteilten optischen Sendern (211) oder Empfängern (217) in mehreren zueinander versetzten Sender- oder Empfängerreihen angeordnet ist.

13. Datenübertragungssystem nach einem der Ansprüche 1 bis 12, wobei die drahtlosen optischen Kommunikationen über Li-Fi erfolgen.

14. Einheit, umfassend ein drehendes Element (103), ein festes Element (204) und das Datenübertragungssystem nach einem der Ansprüche 1 bis 13.

15. Windrad, umfassend die Einheit nach Anspruch 14.

## Claims

1. System for transferring data with at least one channel between a rotating element (103) and a fixed element (204) by wireless optical communication, comprising, for each channel:
- a rotating set of at least one rotating optical transmitter (211) or receiver (217), mounted on and secured to the rotating element,
- a fixed set of at least one fixed optical receiver (214) or transmitter (215), mounted on and secured to the fixed element,
- processing means (212) in communication with said at least one transmitter of the rotating set or of the fixed set where applicable,
wherein
one of the rotating set and the fixed set comprises a plurality of optical transmitters (211) or receivers (217) distributed annularly (210, 216) around the rotating element,
the other one of the rotating set and the fixed set comprises at least one optical receiver (214) or transmitter (215) disposed substantially at the same height with respect to the rotation axis of the rotating element, as the plurality of optical transmitters or receivers distributed in a ring,
the fixed and rotating sets are arranged so that, whatever the angular position of the rotating element, where applicable said at least one optical receiver of the other one of the rotating set and the fixed set receives optical signals transmitted by at least one transmitter in said plurality of optical transmitters distributed annularly, or at least one receiver of said plurality of optical receivers distributed annularly receives optical signals transmitted by at least one optical transmitter of the other one of the rotating set and the fixed set,
the processing means are arranged to generate, independently of the angular position of the rotating element, an electrical signal and to transmit, to said at least one transmitter in the rotating set or the fixed set as applicable, said electrical signal so that, if there is more than one transmitter in this set, these transmitters simultaneously transmit the same optical signal,
**characterized in that** one of the rotating set and the fixed set comprises a plurality of optical transmitters installed in series.

2. Data transfer system according to claim 1, wherein
the plurality of transmitters (211) or receivers (217) disposed annularly in a ring are chosen and disposed so that the overlap of light from the transmission and reception current is greater than 30% over the entire circumference of the ring.

3. Data transfer system according to claim 1 or claim 2, wherein
the rotating set comprises a plurality of rotating optical transmitters (211), distributed annularly on the rotating element and secured to the rotating element, and
the fixed set comprises at least one fixed optical receiver (214) mounted on and secured to the fixed element, disposed at the same height as the plurality of rotating optical transmitters (211).

4. Data transfer system according to claim 3, further comprising
a plurality of rotating optical receivers (217) distributed annularly on the rotating element and secured to the rotating element,
at least one fixed optical transmitter (215) mounted on and secured to the fixed element, disposed at the same height as the plurality of rotating optical receivers (217).

5. Data transfer system according to claim 4, wherein
the transmitters (211) in the plurality of rotating optical transmitters distributed annularly transmit at a wavelength different from the wavelength of the at least one fixed optical transmitter (215).

6. Data transfer system according to any of claims 1 to 5, wherein
the processing means (212) comprise digital signal processing means, and means for connection to a plurality of groups of at least one cable channel, to receive a plurality of respective data flows, each flow issuing from a corresponding appliance.

7. System according to claim 6, wherein the digital signal processing means (212) are arranged to allocate a priority parameter value to each flow received and, in the event of concomitant reception of a plurality of flows, to compare the values of the priority parameter associated with the flows received and to transmit as a priority, to the optical transmitter or transmitters, the flow associated with the value of the corresponding priority parameter with the highest degree of priority.

8. Data transfer system according to any of claims 1 to 7, further comprising detection means electrically connected to one or more receivers opposite the plurality of transmitters in series, said detection means being arranged to generate a transmitter fault signalling message in the event of non-reception of a signal.

9. Data transfer system according to any of claims 1 to 8, wherein
one of the rotating set and the fixed set comprises a plurality of receivers disposed in parallel, each receiver being connected to an associated conductive linear element,
the plurality of conductive linear elements corresponding to this plurality of receivers is disposed in parallel and join in a set of at least one node,
and an input of digital signal processing means corresponds to each node in said set.

10. System according to claim 9, wherein means for detecting a fault in the receivers are arranged:
- to carry out an adding over time of the signal or signals issuing from the node or nodes, over a period of time corresponding to at least one degree of angular movement of the rotating element, so as to obtain average measured values,
- in the event of a significant decrease in one of these average measured values compared with the others, to generate a fault suspicion message.

11. System according to claim 9 or claim 10, wherein the means for detecting a failure of the receivers are arranged, in particular in the case of the generation of a fault suspicion message:
(i) to carry out an adding of the signal or signals issuing from the node (or nodes) over a time lying between around 100 periods of the optical signals and a time corresponding to an angular movement of twice the length (along the circumference of the ring) occupied by a receiver, so as to obtain a measured value averaged over a short window,
(ii) to associate, with this measured value averaged over a short window, with an angular position value of the rotating element during corresponding measurements,
- to reiterate steps (i) and (ii) and to seek which angular position corresponds to a minimum of these measured values averaged over a short window.

12. Data transfer system according to any of claims 1 to 11, wherein the plurality of optical transmitters (211) or receivers (217) distributed in a ring is disposed in a plurality of rows of transmitters or receivers offset with respect to each other.

13. Data transfer system according to any of claims 1 to 12, wherein the wireless optical communications take place by Li-Fi.

14. Assembly comprising a rotating element (103), a fixed element (204) and the data transfer system according to any of claims 1 to 13.

15. Wind turbine comprising the assembly according to claim 14.
